# EUROPÄISCHE PATENTSCHRIFT

(11) **EP 1 693 252 B1**
(45) Veröffentlichungstag und Bekanntmachung des Hinweises auf die Patenterteilung: **12.12.2007**
(21) Anmeldenummer: 05022845.1
(22) Anmeldetag: 20.10.2005
(51) Int. Cl.: B60R 19/44, F16B 5/12

(54) **Befestigungsmechanismus**
Mounting mechanism
Mécanisme de montage

(30) Priorität: 22.02.2005 DE 202005002907 U
(43) Veröffentlichungstag der Anmeldung: 23.08.2006
(73) Patentinhaber: PEGUFORM GMBH, 79268 Bötzingen (DE)
(72) Erfinder: Tschiggfrei, Norbert, 79356 Eichstetten (DE)
(74) Vertreter: Patentanwälte Westphal, Mussgnug & Partner

(56) Entgegenhaltungen:
- EP-A- 0 703 008
- EP-A- 1 512 582
- DE-A1- 10 250 392
- US-A- 3 074 134
- US-A1- 2003 082 310

## Beschreibung

Die Erfindung betrifft einen Befestigungsmechanismus sowie eine Anordnung mehrerer Befestigungsmechanismen zur Befestigung eines Bauteils an einer Karosserie eines Kraftfahrzeugs.

Bisher ist es üblich, bei der Befestigung von Verkleidungsteilen an der Karosserie eines Kraftfahrzeugs zwischen dem Verkleidungsteil und der Karosserie eine Fuge von etwa 2 mm oder breiter vorzusehen. Dieser relativ große Abstand zwischen dem Verkleidungsteil und der Karosserie wird u.a. aufgrund des unterschiedlichen Wärmeausdehnungsverhaltens der meist aus Kunststoff bestehenden Verkleidungsteile und der Metallkarosserie belassen. Weiterhin wird durch die breite Fuge ein Aneinanderreiben der Verkleidungsteile und der Karosserie, insbesondere bei schlechten Straßenverhältnissen, und damit eine Beschädigungen der Lackierung vermieden.

Das Vorsehen eines Abstandes zwischen den Verkleidungsteilen und der Karosserie hat den Vorteil, dass bei Nachlackierarbeiten an der Karosserie ein Wärmeschutzblech in die Fuge zwischen dem Verkleidungsteil und Karosserie geklemmt werden kann. Das Vorsehen eines solchen Hitzeschildes für die Verkleidungsteile ist bei Lackierarbeiten an der Karosserie von Vorteil, da die bei dem Lackierprozess auftretenden hohen Temperaturen die meist aus Kunststoff bestehenden Verkleidungsteile oder deren Lackierung beschädigen können.

Mittlerweile wird aus ästhetischen Gründen immer mehr zu sogenannten Nullfugen zwischen der Verkleidung und der Karosserie übergegangen. Unter einer Nullfuge ist zu verstehen, dass das Verkleidungsteil unmittelbar auf der Karosserie anliegt, oder der Abstand zwischen Verkleidungsteil und Karosserie sehr gering ist, insbesondere weniger als 1 mm beträgt. In der Regel wird die Verkleidung zur Realisierung einer Nullfuge mittels eines Rastmechanismus gegen die Karosserie gezogen und an dieser gehalten.

Das Vorsehen dieser sogenannten Nullfugen führt zu erheblichen Problemen im Fertigungsprozess von Kraftfahrzeugen. Wird die Lackierung der Karosserie während der Fertigung nach der Montage von Verkleidungsteilen, wie beispielsweise der Stoßfänger, beschädigt, müssen zumindest einige Verkleidungsteile zu deren Schutz vor den beim notwenigen Nachlackierprozess auftretenden Temperaturen demontiert und abgelegt werden, da in eine Nullfuge kein Wärmeschutzblech eingeführt werden kann, um das Verkleidungsteil zu schützen. Diese Demontage ist nicht nur äußerst zeitaufwendig - es besteht zusätzlich die Gefahr, dass die Verkleidungsteile bei der Demontage oder bei deren Zwischenlagerung ebenfalls beschädigt werden. Nach Beendigung des Lackiervorgangs müssen die Verkleidungsteile dann wieder montiert werden.

In der US 3 074 134 wird ein Befestigungsmechanismus zur Befestigung eines Bauteils an einer Karosserie eines Fahrzeugs beschrieben, wobei flexible Halter in entsprechende Öffnungen der Karosserie des Fahrzeugs gepresst und dabei gespreizt und fixiert werden. Nach der Befestigung ist die Fixierung dieser Halter jedoch starr und das Bauteil kann ohne Beschädigung des Halters nicht mehr entfernt werden. In der EP 0 703 008 A2 wird eine Halte- und Rastvorrichtung zum Bearbeiten und/oder Behandeln eines mehrteiligen Gegenstandes beschrieben. Dabei werden Gegenstände lösbar miteinander befestigt, so dass sie gemeinsam bearbeitet und behandelt werden können. In einem anschließenden Arbeitsgang werden die Teile dann dauerhaft miteinander befestigt. Für Nachbesserungen oder Reparaturen bietet das System keine Vorteile.

Der Erfindung liegt die Aufgabe zu Grunde, einen Befestigungsmechanismus sowie eine Anordnung von Befestigungsmechanismen zur Befestigung eines Bauteils, insbesondere eines Verkleidungsteils, an einer Karosserie eines Kraftfahrzeugs vorzuschlagen, mit dem bzw. mit der die notwendigen Arbeiten im Zusammenhand mit eventuell notwendige Nachlackierarbeiten erleichtert werden.

Diese Aufgabe wird mit einem Befestigungsmechanismus mit den Merkmalen des Anspruchs 1 sowie mit einer Anordnung von mehreren Befestigungsmechanismen gemäß Anspruch 14 gelöst.

Vorteilhafte Ausgestaltungen der Erfindung sind in den Unteransprüchen angegeben.

Erfindungsgemäß ist der Befestigungsmechanismus zur Befestigung eines Bauteils, insbesondere eines Verkleidungsteils, an einer Fahrzeugkarosserie derart ausgebildet, dass er mindestens zwei unterschiedliche Montagepositionen für das Bauteil bereitstellt, in denen das Bauteil an der Karosserie gehalten werden kann. Die beiden Montagepositionen sind dabei derart angeordnet, dass mindestens eine Fuge zwischen dem Bauteil und einem Anbauteil, zum Beispiel einer Heckleuchte oder einem anderen Verkleidungsteil, und/oder zwischen dem Bauteil und der Karosserie in den verschiedenen Montagepositionen unterschiedlich breit ist. Dabei wird man in der Regel mit zwei unterschiedlichen Montagepositionen auskommen, wovon eine Montageposition die Endmontageposition des Bauteils und eine andere Montageposition eine Park- oder Zwischenmontageposition für das Bauteil ist.

Durch den erfindungsgemäßen Befestigungsmechanismus ist es möglich, die Karosserie in einem ersten Schritt zu lackieren und in einem zweiten Schritt weitere Bauteile, insbesondere Verkleidungsteile, mittels des Befestigungsmechanismus an der Karosserie zu befestigen. Dabei eröffnet der erfindungsgemäße Befestigungsmechanismus zwei unterschiedliche Vorgehensweisen bei der Montage. Zum Einen können die Bauteile direkt in der Endmontageposition, also vorzugsweise unter Vorsehen mindestens einer Nullfuge zwischen dem Bauteil und einem Anbauteil und/oder zwischen dem Bauteil und der Karosserie, an der Karosserie befestigt werden. Werden bei einer späteren Kontrolle Beschädigungen des Karosserielacks festgestellt, können die Bauteile aus der Endmontageposition des Befestigungsmechanismus gelöst und in die Park- bzw. Zwischenmontageposition überführt werden. Die beiden Montagepositionen sind dabei in Ausgestaltung der Erfindung soweit voneinander beabstandet, dass die Breite der Fuge in der Parkposition ausreichend bemessen ist, um ein Wärmeschutzblech in die Fuge einführen zu können. Hierfür ist eine Fugenbreite von etwa größer/gleich 2 mm vom Vorteil. Nach Einführen des Wärmeschutzbleches kann die Karosserie nachlackiert werden, ohne dass das oder die Bauteile beim Lackierprozess Schaden nehmen.

Eine andere Möglichkeit besteht darin, die Bauteile nach dem Lackieren der Karosserie zunächst lediglich in der Parkposition des Befestigungsmechanismus an der Karosserie zu montieren. Nachdem der Karosserielack in einem nächsten Schritt überprüft wurde, können die Bauteile, eventuell nach Durchführung von Nachlackierarbeiten an der Karosserie und/oder den Bauteilen von der Parkposition in die Endmontageposition überführt werden.

Um die Bauteile von der Parkposition in die Endmontageposition oder umgekehrt überführen zu können, sind die Bauteile in den unterschiedlichen Montagepositionen lösbar befestigt, insbesondere lösbar verrastet oder geklemmt. Es muss sichergestellt sein, dass die Bauteile zumindest in der Parkposition und in der Endmontageposition unverlierbar bzw. nur unter erheblicher Krafteinwirkung verlierbar an der Karosserie gehalten sind.

In Ausgestaltung der Erfindung ist mit Vorteil vorgesehen, dass ein Bestandteil des Befestigungsmechanismus mindestens eine Führungsschiene, vorzugsweise aus Kunststoff, ist, die das Bauteil in den unterschiedlichen Montagepositionen hält. Dabei ist die Führungsschiene mit Vorteil an der Karosserie befestigt. Um die lösbare Befestigung in den unterschiedlichen Montagepositionen zu ermöglichen sind als Bestandteil des Befestigungsmechanismus Befestigungsmittel wie Rastmittel oder Klemmmittel an dem Bauteil und/oder an der Führungsschiene vorgesehen. Der Befestigungsmechanismus wird demnach aus mindestens einer Führungsschiene und dem Verkleidungsteil selbst gebildet. Es ist auch denkbar, dass die Führungsschiene einstückig mit der Karosserie ausgebildet ist.

Es ist von besonderem Vorteil, wenn die Führungsschiene eine Abstufung, insbesondere mit Übergangsschräge zwischen den Stufen, aufweist. Hierdurch wird ein Höhenunterschied des Bauteils in den unterschiedlichen Montagepositionen bereitgestellt.

Insbesondere wenn es sich bei dem zu befestigenden Bauteil um einen im Wesentlichen U-förmigen Stoßfänger handelt, ist mit Vorteil vorgesehen, dass der Befestigungsmechanismus Mittel zum Spreizen des Bauteils beim Verschieben von der Endmontageposition in die Parkposition aufweist. Je nach Bauart des Bauteils, insbesondere des Stoßfängers, ist diese Spreizung notwendig, um den gewünschten Abstand zwischen Karosserie und Bauteil herzustellen.

Insbesondere bei derart großen Bauteilen wie Stossfängern sind mehrere erfindungsgemäße Befestigungsmechanismen notwendig, um das Bauteil an der Karosserie zu fixieren. Es wird also eine Anordnung mehrere Befestigungsmechanismen entlang des Bauteils vorgesehen. Dabei können einzelne Befestigungsmechanismen unterschiedliche Funktionen haben. Beispielsweise können zwei Befestigungsmechanismen eine Spreizfunktion realisieren, wohingegen die weiteren Befestigungsmechanismen lediglich zwei Montagepositionen bereitstellen.

Im Folgenden wird die Erfindung an in der Zeichnung dargestellten Ausführungsbeispielen näher erläutert.

Dabei zeigen:
- Fig. 1: eine hintere Verkleidung eines Kraftfahrzeugs in der Endmontageposition,
- Fig. 2a: einen seitlichen Befestigungsmechanismus mit Verkleidung in Parkposition,
- Fig. 2b: eine Schnittdarstellung entlang der Schnittlinie A-A nach Fig. 2a,
- Fig. 3a: den Befestigungsmechanismus gemäß Fig. 2a mit Verkleidung in Endmontageposition,
- Fig. 3b: eine Schnittdarstellung entlang der Schnittlinie B-B nach Fig. 3a,
- Fig. 4a: ein Detail des seitlichen Befestigungsmechanismus gemäß den Figuren 2a bis 3b mit Verkleidung in Parkposition,
- Fig. 4b: eine Schnittdarstellung entlang der Schnittlinie G-G nach Fig. 4a,
- Fig. 5a: das Detail des seitlichen Befestigungsmechanismus nach Fig. 4a mit Verkleidungsteil in Endmontageposition,
- Fig. 5b: eine Schnittdarstellung entlang der Schnittlinie H-H nach Fig. 5a,
- Fig. 6a: einen Befestigungsmechanismus im Bereich der Heckleuchte mit Verkleidung in Parkposition,
- Fig. 6b: eine Schnittdarstellung entlang der Schnittlinie G-G nach Fig. 6a,
- Fig. 7a: den Befestigungsmechanismus gemäß Fig. 6a im Bereich der Heckleuchte mit Verkleidung in Endmontageposition,
- Fig. 7b: eine Schnittdarstellung entlang der Schnittlinie H-H nach Fig. 7a,
- Fig. 8a: einen Befestigungsmechanismus im mittleren Bereich mit Verkleidung in Parkposition,
- Fig. 8b: eine Schnittdarstellung entlang der Schnittlinie E-E nach Fig. 8a,
- Fig. 9a: den Befestigungsmechanismus gemäß Fig. 8a im mittleren Bereich mit Verkleidung in Endmontageposition und
- Fig. 9b: eine Schnittdarstellung entlang der Schnittlinie F-F nach Fig. 9a.

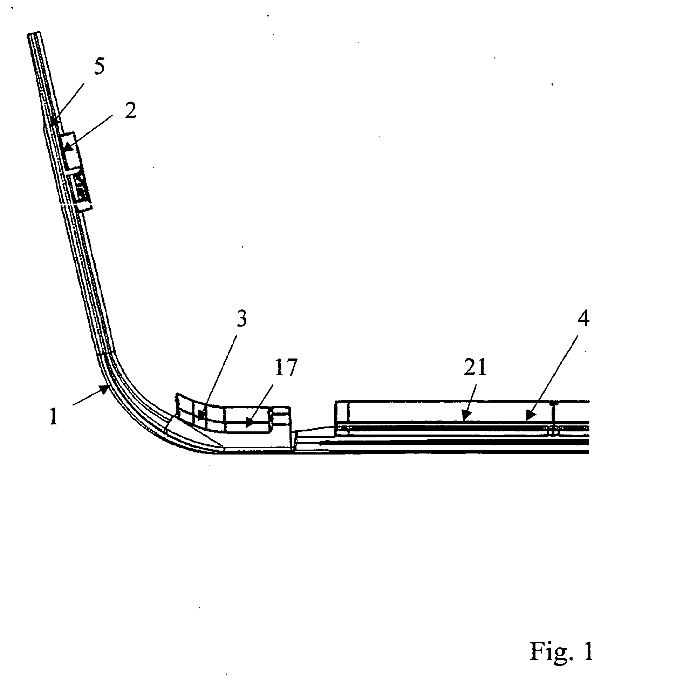

In Figur 1 ist als zu montierendes Bauteil die linke Hälfte einer hinteren Verkleidung 1 eines nicht dargestellten Kraftfahrzeugs gezeigt. Die Verkleidung 1 ist an der nicht dargestellten Karosserie mittels mehrere Befestigungsmechanismen 2, 3, 4 befestigt. Der mit Bezugszeichen 2 bezeichnete Befestigungsmechanismus dient zur Fixierung der hinteren Verkleidung 1 im seitlichen Bereich. Der mit Bezugszeichen 3 gekennzeichnete Befestigungsmechanismus dient zur Fixierung der Verkleidung 1 im Bereich der Heckleuchte und der mit Bezugszeichen 4 gekennzeichnete Befestigungsmechanismus dient zur Fixierung der Verkleidung 1 im hinteren, mittleren Bereich. Da die hintere Verkleidung 1 symmetrisch aufgebaut ist, ist jeder der Befestigungsmechanismus 2, 3, 4 zweimal vorgesehen. Der Übersichtlichkeit halber ist in Figur 1 jedoch nur die linke Hälfte der hinteren Verkleidung 1 dargestellt.

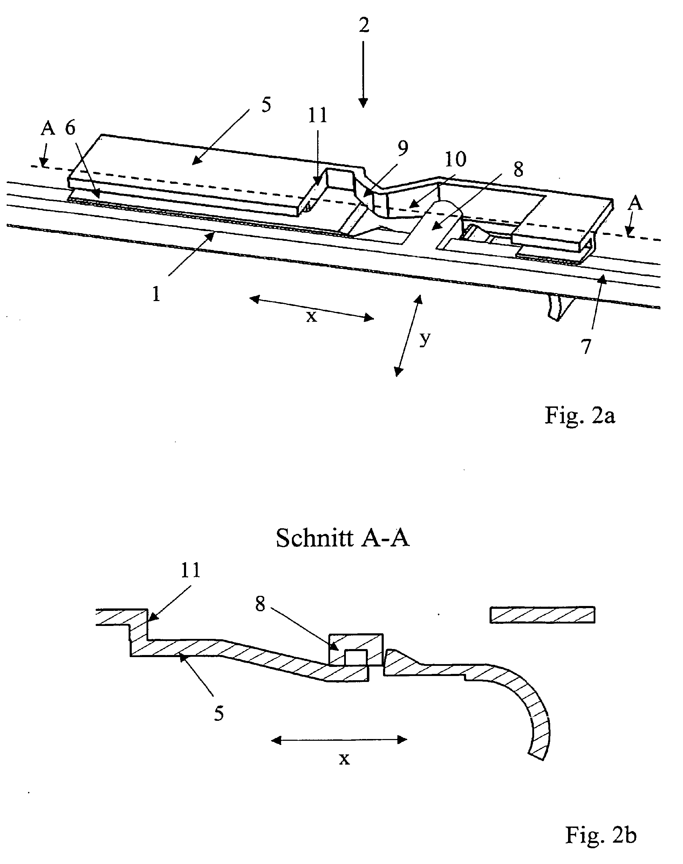

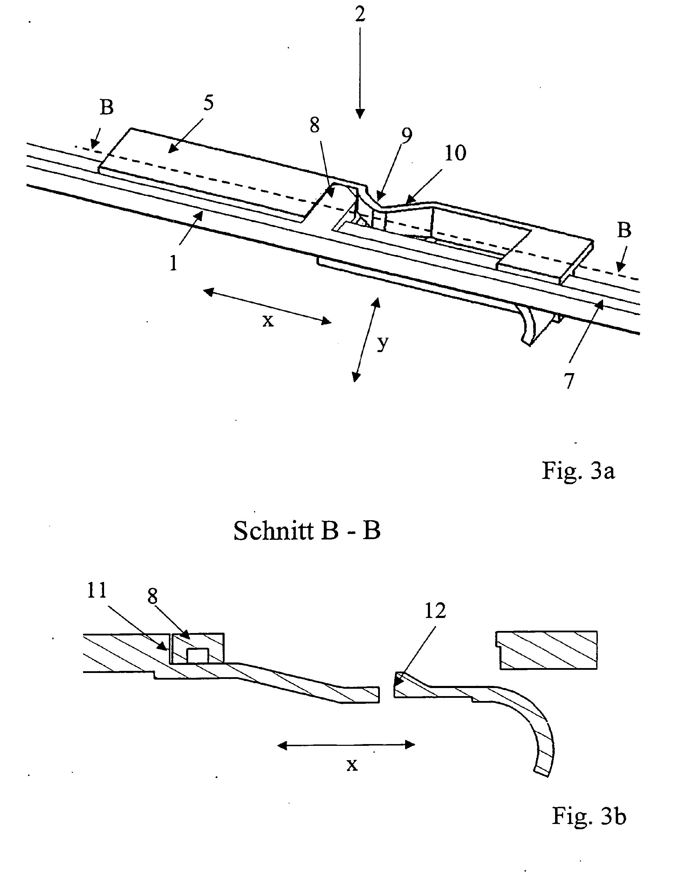

In den Figuren 2a bis 3b ist ein Teil des Befestigungsmechanismus 2 für den seitlichen Bereich dargestellt. Die Figuren 2a und 2b zeigen die Verkleidung 1 in Parkposition, wohingegen die Figuren 3a und 3b die Verkleidung 1 in der Endmontageposition darstellen. Da in den Figuren 2a bis 3b die Karosserie nicht eingezeichnet ist, ist auch die in beiden Montagepositionen unterschiedlich breite Fuge zwischen Verkleidung 1 und Karosserie nicht zu erkennen.

Der Befestigungsmechanismus 2 weist eine fest an der Karosserie fixierte Führungsschiene 5 auf. Die Führungsschiene 5 weist eine längs der Führungsschiene 5 verlaufende Führungsnut 6 mit U-Profil auf, in der die Verkleidung 1 in der in den Figuren 3a und 3b dargestellten Endmontageposition mit einem längs verlaufenden, zur Führungsnut 6 formkomplementären Führungsabsatz 7 gehalten ist. In der in den Figuren 2a und 2b dargestellten Parkposition ist der längliche Führungsabsatz 7 unterhalb der Führungsnut 6 angeordnet.

Um die Verkleidung 1 von der Endmontageposition in die Parkposition zu verbringen, ist es notwendig, die Verkleidung 1 zunächst aufzuspreizen, um den Führungsabsatz 7 aus der Führungsnut 6 heraus in die in den Figuren 2a und 2b dargestellte, untere Position zu verbringen. Hierzu ist als Teil des Befestigungsmechanismus 2 an der Verkleidung 1 eine Spreiznase 8 angeformt. Diese Spreiznase 8 wird bei dem Verschieben von der Endmontageposition in die Parkposition oder zurück entlang zweier Führungsschrägen 9, 10 der Führungsschiene 5 verschoben. Um die Beweglichkeit der Verkleidung 1 entlang der X-Achse zu begrenzen, sind zwei Anschläge 11, 12 vorgesehen. Der in der Zeichnungsebene links gelegene Anschlag 11 begrenzt die Endmontageposition, wohingegen der in der Zeichenebene rechts gelegene Anschlag 12 die Parkposition in X-Richtung begrenzt. Zwischen den beiden Anschlägen 11, 12 kann die Verkleidung 1 entlang der Führungsschiene 5 verschoben werden. Dabei ist der Abstand zwischen Verkleidung 1 und nicht dargestellter Karosserie in den Figuren 3a und 3b wesentlich geringer als in den Figuren 2a und 2b.

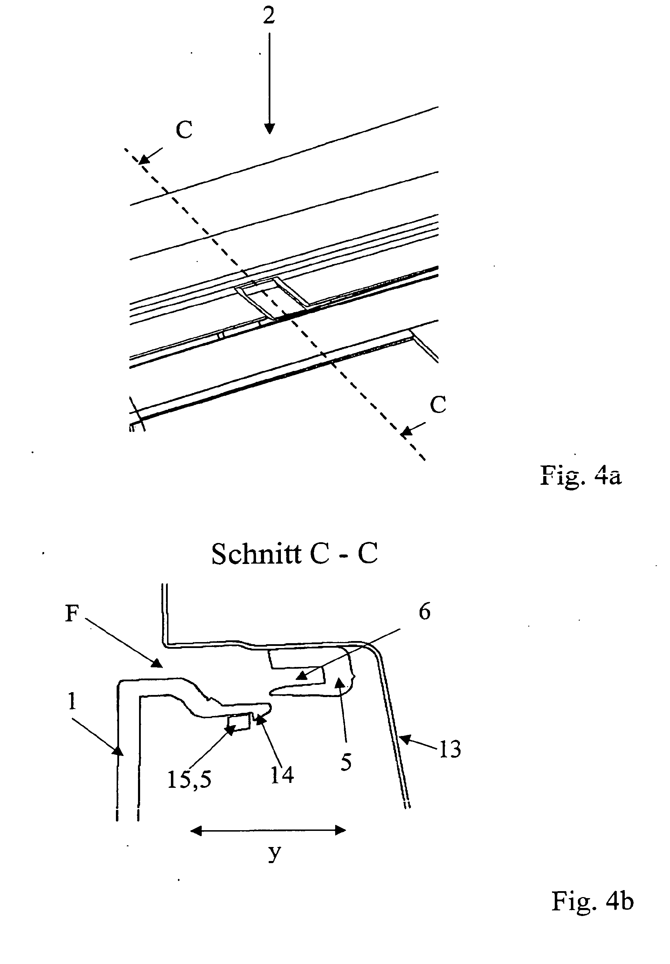

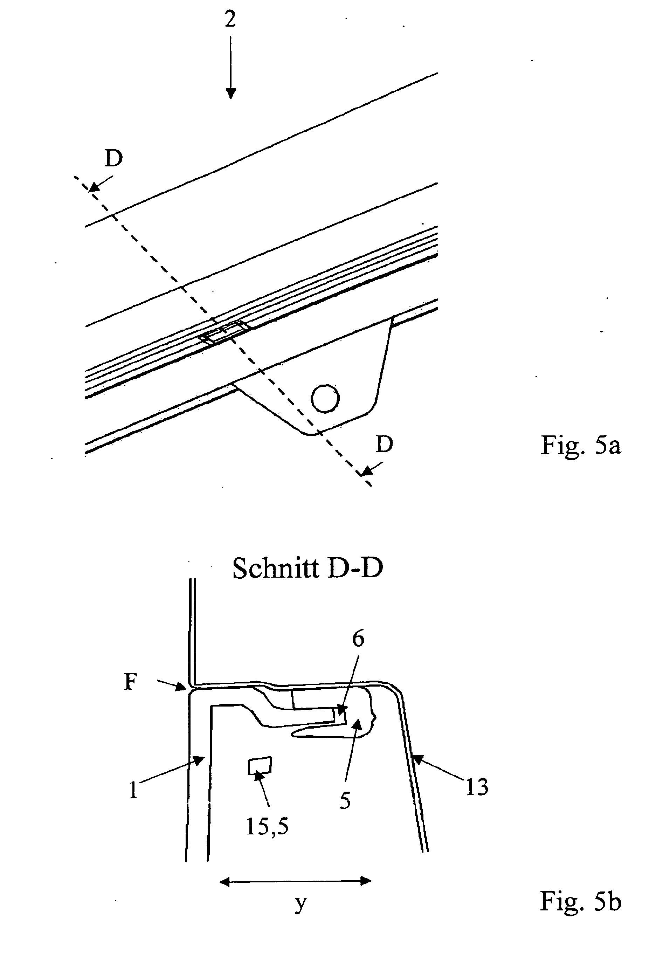

In den Figuren 4a bis 5b ist ein in den Figuren 2a bis 3b nicht zu erkennendes Detail des Befestigungsmechanismus 2 im seitlichen Bereich dargestellt. Dieses Detail dient zur Gewährleistung einer unverlierbaren Halterung der Verkleidung 1 in Y-Richtung. In der in den Figuren 4a und 4b dargestellten Parkposition wird die Verkleidung 1 von einer Rastnase 14 am Führungsabsatz 7 an einem Vorsprung 15 der Führungsschiene 5 gehalten. Die Fuge F zwischen Verkleidung 1 und Karosserie 13 ist ausreichend breit, um ein nicht dargestelltes Wärmeschutzblech aufnehmen zu können. In den Figuren 5a und 5b ist die Endmontageposition der Verkleidung 1 dargestellt. Diese ist mittels einer Rastnase 14 in der Führungsnut 6 der Führungsschiene 5 gehalten bzw. in dieser geklemmt.

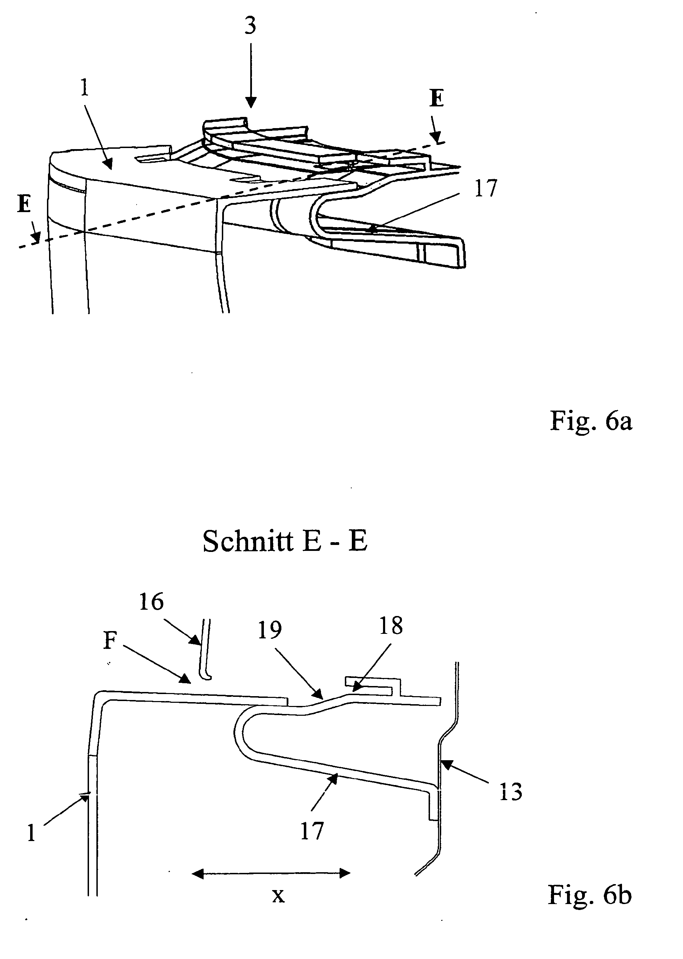

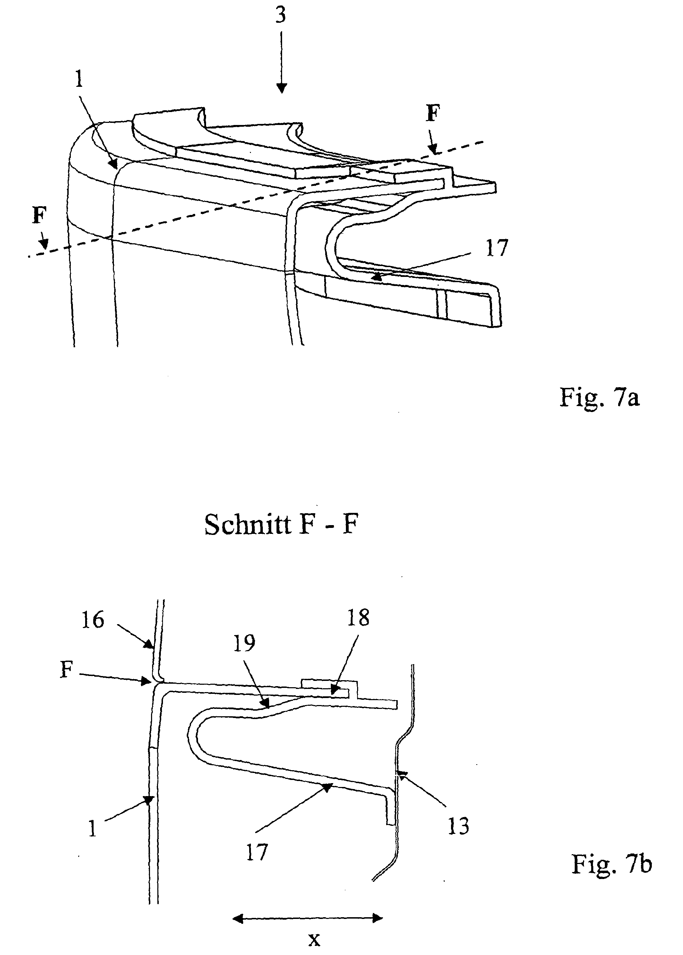

In den Figuren 6a bis 7b ist der Befestigungsmechanismus 3 im Bereich des Anbauteils Heckleuchte 16 dargestellt. Die Fuge F zwischen der Verkleidung 1 und dem Anbauteil 16 (Heckleuchte) ist in den in Figuren 6a und 6b dargestellten Parkposition wesentlich breiter als in der in den Figuren 7a und 7b dargestellten Endmontageposition. Die an der Karosserie 13 befestigte Führungsschiene 17 ist mit einer in Längsrichtung der Führungsschiene 17 verlaufenden U-förmigen Nut 18 versehen. In der Endmontageposition ist die Verkleidung 1 in der Nut 18 geklemmt. Zu erkennen ist die stufenförmige Ausbildung der Führungsschiene 17, aufgrund derer sich die Verkleidung 1 in der Parkposition unterhalb der Verkleidung 1 in der Endmontageposition befindet. In der Parkposition liegt die Verkleidung 1 auf der unteren Stufe der Führungsschiene 17 auf. Der Übergang von der unteren Stufe in die obere Stufe der Führungsschiene 17 ist fließend mittels einer Schräge 19 ausgebildet, um die Verkleidung 1 zwischen den beiden Montagepositionen verschieben zu können.

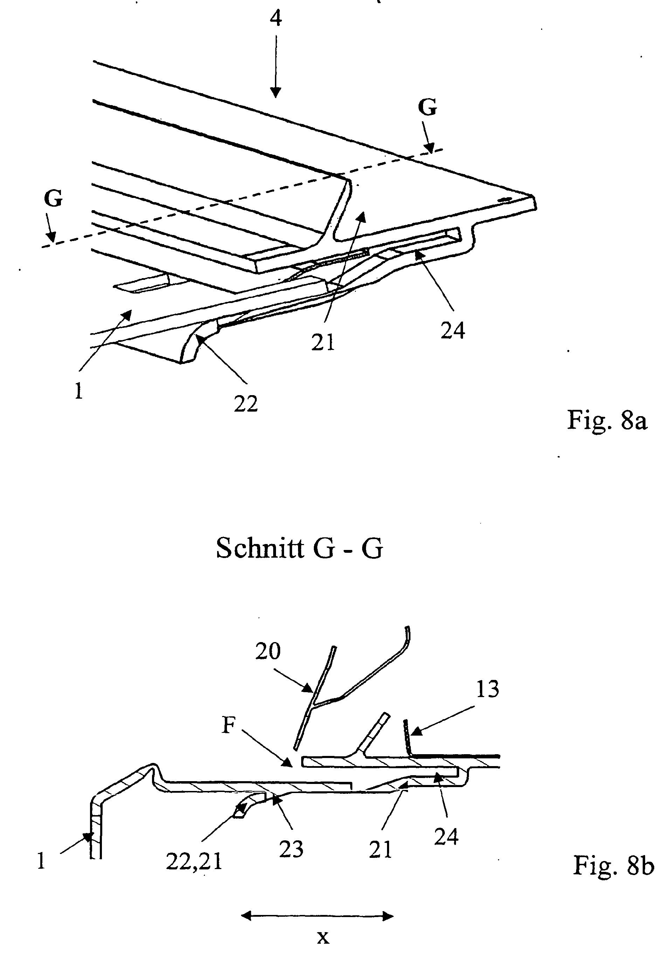

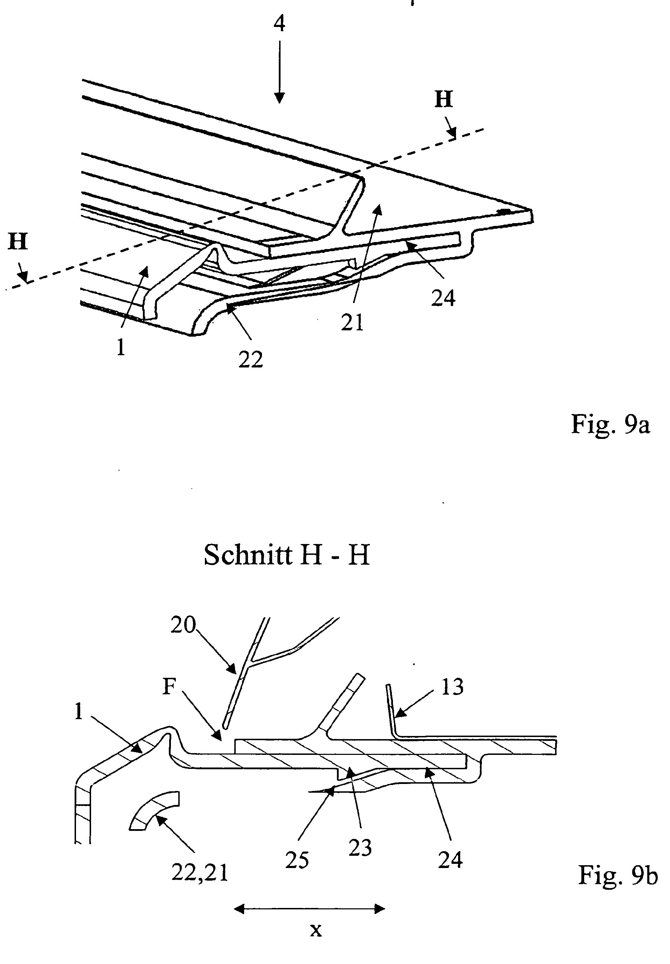

In den Figuren 8a bis 9b ist der Befestigungsmechanismus 4 im hinteren, mittleren Bereich des Fahrzeugs dargestellt. Die Fuge F zwischen dem Verkleidungsteil 1 und der Heckklappe 20 ist in der in den Figuren 8a und 8b dargestellten Parkposition größer als in der in den Figuren 9a und 9b dargestellten Endmontageposition. Bei nicht dargestellter, geschlossener Heckklappe handelt es sich bei der Fuge F um eine Nullfuge. Zur Fixierung der Verkleidung 1 in der Parkposition ist an der Führungsschiene 21 ein Rastvorsprung 22 vorgesehen, der von einer Rastnase 23 der Verkleidung 1 in der Parkposition hintergriffen wird. In der in den Figuren 9a und 9b dargestellten Endmontageposition ist die Verkleidung in einer Nut 24 der Führungsschiene 21 geklemmt. Auch die Führungsschiene 21 des Befestigungsmechanismus 4 ist stufenförmig ausgebildet und weist zwischen den Stufen eine Schräge 25 auf, um einen stufenlosen Übergang zwischen den Montagepositionen zu gewährleisten.

### Bezugszeichenliste:

- 1: Bauteil / Verkleidung
- 2: Befestigungsmechanismus seitlicher Bereich
- 3: Befestigungsmechanismus im Bereich der Heckleuchte
- 4: Befestigungsmechanismus im hinteren Bereich
- 5: Führungsschiene
- 6: Führungsnut
- 7: Führungsabsatz
- 8: Spreiznase
- 9: Führungsschräge
- 10: Führungsschräge
- 11: Anschlag
- 12: Anschlag
- 13: Karosserie
- 14: Rastzunge
- 15: Vorsprung
- 16: Anbauteil / Heckleuchte
- 17: Führungsschiene
- 18: Nut
- 19: Schräge
- 20: Anbauteil / Heckklappe
- 21: Führungsschiene
- 22: Rastvorsprung
- 23.: Rastnase
- 24: Nut
- 25: Schräge
- X-Achse: (Längsachse der Karosserie)
- Y-Achse: (horizontale, senkrecht zur X-Achse verlaufende Achse)

## Patentansprüche

1. Befestigungsmechanismus (2, 3, 4) zu einer lösbaren Befestigung eines Bauteils (1) an einer Karosserie (13) eines Kraftfahrzeugs, wobei das Bauteil (1) in mindestens zwei unterschiedlichen Montagepositionen an der Karosserie (13) befestigbar ist, wobei die Montagepositionen derart angeordnet sind, dass mindestens eine Fuge (F) zwischen dem Bauteil (1) und einem Anbauteil (16, 20) und/oder zwischen dem Bauteil (1) und der Karosserie (13) in den verschiedenen Montagepositionen unterschiedlich breit ist,
**dadurch gekennzeichnet, dass** ein Bestandteil des Befestigungsmechanismus (2, 3, 4) mindestens eine, vorzugsweise mehrere, Führungsschiene (5, 17, 21) ist, die das Bauteil (1) in den unterschiedlichen Montagepositionen hält.

2. Befestigungsmechanismus (2, 3, 4) nach Anspruch 1,
**dadurch gekennzeichnet, dass** der Befestigungsmechanismus (2, 3, 4) derart ausgebildet ist, dass das Bauteil (1) in den verschiedenen Montagepositionen unverlierbar gehalten werden kann.

3. Befestigungsmechanismus (2, 3, 4) nach einem der Ansprüche 1 oder 2,
**dadurch gekennzeichnet, dass** eine Montageposition eine Parkposition und eine andere Montageposition die Endmontageposition des Bauteils (1) an der Karosserie (13) ist.

4. Befestigungsmechanismus (2, 3, 4) nach Anspruch 3,
**dadurch gekennzeichnet, dass** die Fuge (F) zwischen dem Bauteil (1) und dem Anbauteil (16, 20) und/oder zwischen dem Bauteil (1) und der Karosserie (13) in der Endmontageposition eine Nullfuge ist.

5. Befestigungsmechanismus (2, 3, 4) nach einem der Ansprüche 3 oder 4,
**dadurch gekennzeichnet, dass** die Breite der Fuge (F) in der Parkposition derart bemessen ist, dass ein Wärmeschutzblech in die Fuge (F) einführbar ist.

6. Befestigungsmechanismus (2, 3, 4) nach einem der Ansprüche 1 bis 5,
**dadurch gekennzeichnet, dass** der Befestigungsmechanismus (2, 3, 4) Befestigungsmittel (6, 7, 11, 12, 14, 15, 18, 22, 23, 24), insbesondere Rastmittel und/oder Klemmmittel zur, vorzugsweise lösbaren, Befestigung, insbesondere Verrastung bzw. Verklemmung, des Bauteils (1) in mindestens einer, vorzugsweise in sämtlichen, Montagepositionen umfasst.

7. Befestigungsmechanismus (2, 3, 4) nach einem der Ansprüche 1 bis 6,
**dadurch gekennzeichnet, dass** die Führungsschiene (5, 17, 21) an der Karosserie (13) befestigt ist.

8. Befestigungsmechanismus (2, 3, 4) nach Anspruch 6 oder 7,
**dadurch gekennzeichnet, dass** die Befestigungsmittel (6, 7, 11, 12, 14, 15, 18, 22, 23, 24) an dem Bauteil (1) und/oder an der Führungsschiene (5, 17, 21) vorgesehen sind.

9. Befestigungsmechanismus (2, 3, 4) nach einem der Ansprüche 1 bis 8,
**dadurch gekennzeichnet, dass** der Befestigungsmechanismus (2, 3, 4) Mittel (8, 9, 10) zum Spreizen des Bauteils (1) beim Verschieben von der Endmontageposition in die Parkposition aufweist.

10. Befestigungsmechanismus (2, 3, 4) nach einem der Ansprüche 7 bis 9,
**dadurch gekennzeichnet, dass** die Führungsschiene (5, 17, 21) mindestens eine Stufung aufweist, so dass die das Bauteil (1) in der Parkposition tiefer angeordnet ist als in der Endmontageposition.

11. Befestigungsmechanismus (2, 3, 4) nach einem der Ansprüche 1 bis 10,
**dadurch gekennzeichnet, dass** das Bauteil (1) ein Verkleidungsteil, insbesondere ein Stossfänger, ist.

12. Befestigungsmechanismus (2, 3, 4) nach einem der Ansprüche 1 bis 8,
**dadurch gekennzeichnet, dass** das Bauteil (1) und/oder die Führungsschiene (5, 17, 21) aus Kunststoff, insbesondere aus lackiertem Kunststoff, gefertigt ist.

13. Anordnung von mehreren Befestigungsmechanismen (2, 3, 4) nach einem der vorangehenden Ansprüche an einem Kraftfahrzeug.

## Claims

1. Mounting mechanism (2, 3, 4) for detachably fastening a part (1) onto a vehicle body (13) of a motor vehicle, wherein the part (1) can be fixed in at least two different mounting positions on the vehicle body (13), wherein the mounting positions are arranged in such a way that at least one gap (F) between the part (1) and an attachment part (16, 20) and/or between the part (1) and the vehicle body (13) is of differing width in the various mounting positions,
**characterised in that**
a constituent part of the mounting mechanism (2, 3, 4) is at least one, preferably several, guide rail(s) (5, 17, 21), which hold(s) the part (1) in the different mounting positions.

2. Mounting mechanism (2, 3, 4) according to claim 1,
**characterised in that** the mounting mechanism (2, 3, 4) is designed such that the part (1) can be held captive in the various mounting positions.

3. Mounting mechanism (2, 3, 4) according to one of the claims 1 or 2,
**characterised in that** one mounting position is a parking position and another mounting position is the end mounting position of the part (1) on the vehicle body (13).

4. Mounting mechanism (2, 3, 4) according to claim 3,
**characterised in that** the gap (F) between the part (1) and the attachment part (16, 20) and/or between the part (1) and the vehicle body (13) in the end mounting position is a zero-width gap.

5. Mounting mechanism (2, 3, 4) according to one of the claims 3 or 4,
**characterised in that** the width of the gap (F) in the parking position is of such a size that a metal thermal protection sheet can be inserted into the gap (F).

6. Mounting mechanism (2, 3, 4) according to one of the claims 1 to 5,
**characterised in that** the mounting mechanism (2, 3, 4) comprises fastening elements (6, 7, 11, 12, 14, 15, 18, 22, 23, 24), in particular snap-in elements and/or clamping elements to fasten, preferably detachably, in particular by snap-in engagement or clamping, the part (1) in at least one, preferably in all, mounting position(s).

7. Mounting mechanism (2, 3, 4) according to one of the claims 1 to 6,
**characterised in that** the guide rail (5, 17, 21) is fastened to the vehicle body (13).

8. Mounting mechanism (2, 3, 4) according to claim 6 or 7,
**characterised in that** the fastening elements (6, 7, 11, 12, 14, 15, 18, 22, 23, 24) are provided on the part (1) and/or on the guide rail (5, 17, 21).

9. Mounting mechanism (2, 3, 4) according to one of the claims 1 to 8, **characterised in that** the mounting mechanism (2, 3, 4) has means (8, 9, 10) for spreading the part (1) when it is moved from the end mounting position into the parking position.

10. Mounting mechanism (2, 3, 4) according to one of the claims 7 to 9,
**characterised in that** the guide rail (5, 17, 21) has at least one gradation, so that the part (1) is arranged lower when in the parking position than in the end mounting position.

11. Mounting mechanism (2, 3, 4) according to one of the claims 1 to 10,
**characterised in that** the part (1) is a cladding part, in particular a bumper.

12. Mounting mechanism (2, 3, 4) according to one of the claims 1 to 8,
**characterised in that** the part (1) and/or the guide rail (5, 17, 21) is manufactured of plastic, in particular of lacquered plastic.

13. Arrangement of several fastening mechanisms (2, 3, 4) according to one of the preceding claims, on a motor vehicle.

## Revendications

1. Mécanisme de fixation (2, 3, 4) pour la fixation amovible d'un composant (1) sur une carrosserie (13) d'un véhicule automobile dont,
le composant (1) peut se fixer à la carrosserie (13) suivant au moins deux positions de montage différentes, ces positions de montage étant prévues pour avoir au moins un intervalle (F) différent entre le composant (1) et la pièce de réception (16, 20) et/ou le composant et la carrosserie (13) dans les différentes positions de montage,
**caractérisé en ce qu'**
une partie du mécanisme de fixation (2, 3, 4) est constituée par au moins un et de préférence plusieurs rails de guidage (5, 17, 21) tenant le composant (1) dans les différentes positions de montage.

2. Mécanisme de fixation (2, 3, 4) selon la revendication 1,
**caractérisé en ce que**
le mécanisme de fixation (2, 3, 4) est réalisé pour tenir de manière imperdable le composant (1) dans les différentes positions de montage.

3. Mécanisme de fixation (2, 3, 4) selon l'une des revendications 1 ou 2,
**caractérisé en ce qu'**
une position de montage est une position de rangement et une autre, est la position de montage finale de la pièce (1) sur la carrosserie (13).

4. Mécanisme de fixation (2, 3, 4) selon la revendication 3,
**caractérisé en ce que**
l'intervalle (F) entre le composant (1) et la pièce de réception (16, 20) et/ou entre le composant (1) et la carrosserie (13) en position finale de montage est un intervalle nulle.

5. Mécanisme de fixation (2, 3, 4) selon l'une des revendications 3 ou 4,
**caractérisé en ce que**
la largeur de l'intervalle (F) en position de rangement est dimensionnée pour permettre d'introduire une tôle de protection thermique dans l'intervalle (F).

6. Mécanisme de fixation (2, 3, 4) selon l'une des revendications 1 à 5,
**caractérisé en ce que**
le mécanisme de fixation (2, 3, 4) comporte des moyens de fixation (6, 7, 11, 12, 13, 14, 15, 18, 22, 23, 24), notamment des moyens d'enclipsage et/ou des moyens de collage, de préférence pour la fixation amovible, notamment l'accrochage ou le serrage du composant (1) dans au moins l'une et de préférence toutes les positions de montage.

7. Mécanisme de fixation (2, 3, 4) selon l'une des revendications 1 à 6,
**caractérisé en ce que**
le rail de guidage (5, 17, 21) est fixé à la carrosserie (13).

8. Mécanisme de fixation (2, 3, 4) selon l'une quelconque des revendications 6 ou 7,
**caractérisé en ce que**
les moyens de fixation (6, 7, 11, 12, 14, 15, 18, 22, 23, 24) sont prévus sur le composant (1) et/ ou le rail de guidage (5, 17, 21).

9. Mécanisme de fixation (2, 3, 4) selon l'une quelconque des revendications 1 à 8,
**caractérisé en ce que**
le mécanisme de fixation (2, 3, 4) comporte des moyens (8, 9, 10) pour écarter le composant (1) lors du coulissement de la position de montage finale dans la position de rangement.

10. Mécanisme de fixation (2, 3, 4) selon l'une des revendications 7 à 9,
**caractérisé en ce que**
le rail de guidage (5, 17, 21) comporte au moins un gradin de façon que le composant (1) soit plus bas en position de rangement que dans sa position finale de montage.

11. Mécanisme de fixation (2, 3, 4) selon l'une des revendications 1 à 10,
**caractérisé en ce que**
le composant (1) est une pièce d'habillage, notamment un élément absorbant de chocs.

12. Mécanisme de fixation (2, 3, 4) selon l'une des revendications 1 à 8,
**caractérisé en ce que**
le composant (1) et/ou le rail de guidage (5, 17, 21) sont en matière plastique, notamment en matière plastique laquée.

13. Dispositif formé de plusieurs mécanismes de fixation (2, 3, 4) selon l'une des revendications précédentes, équipant un véhicule automobile.
